# FASCICULE DE BREVET EUROPEEN

(11) **EP 3 745 995 B1**
(45) Date de publication et mention de la délivrance du brevet: **06.03.2024**
(21) Numéro de dépôt: 19707857.9
(22) Date de dépôt: 29.01.2019
(51) Int. Cl.: A61C 9/00, A61C 17/02, A61C 17/06

(54) **PORTE-EMPREINTE ELECTRONIQUE POUR LE CAPTAGE D'INFORMATION DENTAIRE**
ELEKTRONISCHE ABDRUCKSCHALE ZUR GEWINNUNG VON ZAHNINFORMATIONEN
ELECTRONIC IMPRESSION TRAY FOR OBTAINING DENTAL INFORMATION

(30) Priorité: 29.01.2018 FR 1850689
(43) Date de publication de la demande: 09.12.2020
(60) Demande divisionnaire: 24152012.1
(73) Titulaire: Duret, François, 11560 Fleury d'Aude (FR); De Vreese, Guy, 9000 Gent (BE)
(72) Inventeur: DURET, François, 11560 Fleury d'Aude (FR); DE VREESE, Guy, 9000 Gent (BE); QUERBES-DURET, Véronique, 31750 Esqualquens (FR)
(74) Mandataire: Rhein, Alain
(86) Numéro de dépôt international: PCT/FR2019/050184
(87) Numéro de publication internationale: WO 2019/145658

(56) Documents cités:
- US-A1- 2002 064 752
- US-A1- 2015 079 534
- US-A1- 2015 118 638
- US-A1- 2017 100 219
- US-A1- 2017 128 173

## Description

La présente invention a pour objet un système de prise d'empreinte électronique permettant de prendre une vue tridimensionnelle de tout ou partie d'une arcade dentaire, pour le captage d'information dentaire.

La présente invention a plus particulièrement pour but de proposer un porte empreinte électronique utilisable pour la prise de mesures tridimensionnelles et temporelles dans le domaine dentaire, et qui consiste en un dispositif comprenant des systèmes de capteurs de mesure optique, associés éventuellement à des senseurs ultrason et/ou OCT (optique cohérente tomographique), un système électronique qui comporte une unité centrale de gestion apte à collecter, stocker et ordonner les données relevées par lesdits capteurs, tandis que lesdits capteurs sont répartis sur tout ou partie dudit porte-empreinte pour permettre de réaliser une empreinte optique en une ou plusieurs prises.

Le présent inventeur a déjà proposé des moyens de réaliser des diagnostics et des prothèses dentaires en utilisant des mesures optiques ou ultrasonique dans la bouche d'un patient, et qui, en association avec des moyens informatiques, permettent de concevoir et de suivre les différentes étapes de l'acte clinique, pour conduire à la réalisation de prothèses sur une machine ou en communiquant avec ses confrères pour une recherche de diagnostics.

Ses nombreux travaux l'ont conduit à la réalisation de nombreuses inventions décrites dans des brevets tels que, notamment mais non limitativement, EP0040165 et EP0091876, relatifs à une prise d'empreinte par des moyens optiques, puis plus récemment dans un nouveau brevet WO2011154656.

Si ces documents correspondent effectivement aux besoins de la dentisterie moderne, en particulier tel que ce qui est décrit dans le document WO 2.011154656, il s'avère qu'a l'usage, la mise en œuvre de ces inventions a nécessité des recherches supplémentaires pour faciliter leur exploitation.

On connaît par ailleurs des documents dans lesquels sont proposées d'autres solutions.

C'est le cas par exemple du document US 2017100219, qui propose un porte-empreinte comprenant des moyens capteurs aptes à prendre une empreinte d'au moins une partie d'une dent ou d'un ensemble de dents, lesdits moyens capteurs étant associés avec un matériau de moulage, utilisés habituellement pour les prises d'empreintes, en sorte qu'un tel porte-empreinte ne peut pas donner satisfaction.

On connait également par le document US201511863S, un porte-empreinte constitué d'un plateau ou d'une goulotte, et équipé de moyens capteurs permettant d'obtenir des images qui, combinées, sont destinées à déterminer la profondeur de sulcus chez un individu édenté en vue de son appareillage. Une tel porte-empreinte ne permet pas le captage d'information dentaire.

On connaît aussi, par le document US2017128173, un dispositif de balayage comprenant une poignée destinée à être tenue par un opérateur et un embout buccal comprenant un scanner 3D ainsi que des moyens de déplacement dudit scanner 3D à l'intérieur dudit embout buccal. Si un tel appareil peut être considéré comme d'un usage simple, son usage présente des limites. En effet, quelles que soient les possibilités de mouvement du scanner 3D à l'intérieur de l'embout buccal, toutes les surfaces ne peuvent pas être atteintes avec la même précision, si elles peuvent être atteintes.

Il s'avère que la connaissance des contours osseux, associée à l'empreinte optique, oblige à des manipulations complexes et a des connaissances très importantes, ce qui a conduit à la nécessité de concevoir un système de porte empreinte global devant répondre à un cahier des charges.

Selon ce cahier des charges, le porte-empreinte électronique doit, :out d'abord, être simple d'utilisation pour le praticien et sa mise en bouche doit être spontanée, courte et rapide. Pour le patient. elle ne doit pas être traumatisante.

En particulier sa forme doit être adaptée aux différentes formes d'arcade ou, encore, les lumières utilisées ne doivent pas éblouir des capteurs choisis car ils sont particulièrement réduits en volume.

Comme la zone à mesurer est limitée par les joues et la gencive, le nombre de capteurs doit être suffisamment élevé pour que la surface visée soit totalement recouverte par la lecture. L'encombrement doit lui aussi être réduit à son plus strict minimum et ceci élimine d'emblée tout système utilisant la projection de lumière structurée. Doivent donc être utilisés des systèmes passifs comme la stéréoscopie et l'OCT ou des systèmes mettant en oeuvre des émetteurs et des capteurs très réduits ou fusionnés comme dans l'ultra-son.

Il faut aussi donner la possibilité de potentialiser l'empreinte optique en bouche, qui reste un acte pénalisant pour le patient, en recueillant en même temps, ou en temps très proche, la forme des surfaces dentaires et leurs teintes, les surfaces gingivales, les mouvements des arcades les unes par rapport et même, si le temps le permet, les contours osseux.

La présente invention a pour objet de répondre à tous ces besoins, à moindre cout, en satisfaisant le patient par son confort et sa rapidité mais aussi sans obliger le praticien à avoir une formation trop complexe ou trop longue, tout en gardant un investissement raisonnable.

Ainsi, le porte empreinte électronique selon l'invention est utilisable pour la prise de mesures tridimensionnelles et temporelles dans le domaine dentaire, il consiste en un dispositif comprenant des systèmes de capteurs de mesure optique, un système électronique qui comporte une unité centrale de gestion apte à collecter, stocker et ordonner les données relevées par lesdits capteurs, tandis que lesdits capteurs sont répartis sur tout ou partie dudit porte-empreinte pour permettre de réaliser une empreinte optique de tout ou partie d'une arcade dentaire en une ou plusieurs prises, et il se caractérise en ce qu'il consiste en une pièce présentant la forme de tout ou partie d'une arcade dentaire, et qui est de conception évolutive au travers de facultés de construction en plusieurs éléments assemblables et solidarisables de manière réversible, en sorte de présenter la forme optimale, il est réalisé en au moins deux éléments solidarisables, chacun adapté à la prise d'empreinte d'au moins une partie d'une arcade, lesdits au moins deux éléments étant configurés en sorte que des capteurs d'au moins l'un d'eux s'associent à des capteurs d'un autre élément, de manière que l'empreinte optique d'au moins une partie de l'arcade soit réalisée avec des capteurs desdits au moins deux éléments.

Selon une caractéristique additionnelle du porte-empreinte électronique selon l'invention, les capteurs de mesure optique sont associés à des senseurs à ultrason et/ou OCT (optique cohérente tomographique).

Selon une autre caractéristique additionnelle du porte-empreinte électronique selon l'invention il est réalisé en un matériau déformable tel qu'une matière thermoplastique ou une résine souple, ne revenant pas à la forme d'origine après adaptation dans la bouche du patient.

Selon une autre caractéristique additionnelle du porte-empreinte électronique selon l'invention, sa partie active, équipée de capteurs, présente une forme adaptée ou adaptable par déformation, aux particularités de l'occlusion.

Selon une autre caractéristique additionnelle du porteélectronique selon l'invention, les au moins deux éléments solidarisables sont conformés pour être solidarisés, de manière réversible, par emboîtement.

Selon une autre caractéristique additionnelle du porteélectronique selon l'invention, les au moins deux éléments solidarisables sont conformés pour être solidarisés magnétiquement.

Selon une autre caractéristique additionnelle du porte-empreinte électronique selon l'invention, il comporte des moyens de réglage de profondeur consistant en des moyens de prise d'appui sur les dents.

Selon une autre caractéristique additionnelle du porte-empreinte électronique selon l'invention, les moyens de prise d'appui sur les dents consistent en au moins une lame, tige ou analogue, faisant saillie entre les capteurs.

Selon une autre caractéristique additionnelle du porte-empreinte électronique selon l'invention, les moyens de prise d'appui sur les dents consistent en au moins une paroi transparente, s'étendant au-dessus des capteurs.

Selon une autre caractéristique additionnelle du porte-empreinte électronique selon l'invention, la paroi transparente présente des repères.

Selon une autre caractéristique additionnelle du porte-empreinte électronique selon l'invention la paroi transparente est déformable.

Selon une autre caractéristique additionnelle du porte-empreinte électronique selon l'invention, la paroi transparente est associée en contact glissant à une autre paroi transparente, qui coopère avec des moyens, motorisés ou non, aptes à générer un mouvement de frottement entre lesdites parois transparentes.

Selon une autre caractéristique additionnelle du porte-empreinte électronique selon l'invention, il comporte un système d'aspiration, périphérique et/ou central, et/ou un système de jet d'eau et/ou d'air.

Selon une autre caractéristique additionnelle du porte-empreinte électronique selon l'invention, il comporte des moyens de projection de lumière passive, non structurée, pour éclairer l'intérieur de la bouche.

Selon une autre caractéristique additionnelle du porte-empreinte électronique selon l'invention, il est de couleur noire afin de ne pas gêner la prise d'informations.

Selon une autre caractéristique additionnelle du porte-empreinte électronique selon l'invention, sa partie comportant les capteurs, est désolidarisée du reste du porte-empreinte et connectée à ce dernier au travers de moyens filaires ou d'un système de communication sans fil.

Les avantages et les caractéristiques du porte-empreinte électronique selon l'invention, ressortiront plus clairement de la description qui suit et qui se rapporte aux dessins annexés, lesquels en représentent plusieurs modes de réalisation non limitatifs,

Dans les dessins annexés :
- les figures 1a, 1b, 1e et 1d représentent des vues schématiques en plan de différents modes de réalisation d'un porte-empreinte électronique selon l'invention.
- les figures 2a, 2b et 2c représentent des vues schématiques en perspective d'un autre mode de réalisation du porte-empreinte électronique selon l'invention dans des configurations différentes d'utilisation.
- les figures 3a et 3b, et 4 représentent des vues schématiques en coupe d'un porte-empreinte électronique selon l'invention dans des configurations différentes d'utilisation.
- la figure 5 représente une vue schématique en perspective et en éclaté d'un mode de réalisation particulier du porte-empreinte électronique selon l'invention,
- les figures 6a, 6b et 6c représentent des vues schématiques en plan d'un autre mode de réalisation d'un porte-empreinte électronique selon l'invention dans des configurations différentes d'utilisation.
- la figure 7a représente une vue schématique partielle en plan d'un porte-empreinte électronique selon l'invention, selon une variante de construction.
- la figure 7b représente une vue schématique en coupe de la figure 7a,
- la figure 8a représente une vue schématique partielle en plan d'un porte-empreinte électronique selon l'invention, selon une variante de construction.
- la figure 8b représente une vue schématique en coupe de la figure 8a,
- les figures 9a, 9b, 9c, 10a et 10b, représentent des vues schématiques en plan d'un porte-empreinte électronique selon l'invention , selon différentes variantes de réalisation,
- la figure 11a représente une vue schématique en plan d'un autre mode de réalisation d'un porte-empreinte électronique selon l'invention.
- les figures 11b et 11c représentent le même porte-empreinte des configurations différentes d'utilisation,
- les figures 12a et 12b représentent des vues schématiques en plan d'une variante du porte-empreinte électronique selon l'invention,
- les figures 13a et 13b représentent des vues schématiques en perspective de parties de porte-empreintes électronique selon l'invention, dans la cadre d'une disposition particulière.
- les figures 14a , 14b et 14c représentent des vues schématiques d'un autre mode de réalisation du porte-empreinte électronique selon l'invention.
- la figure 15 représente une vue schématique partielle et en perspective d'un élément du porte-empreinte électronique des figures 14a, 14b et 14c.
- les figures 16a et 16b représentent des vues schématiques partielles et en perspective d'une variante du mode de réalisation du porte-empreinte optique des figures 14a, 14b et 14c,
- les figures 17a et 17b représentent des vues schématiques partielles et en perspective d'évolutions de la variante du mode de réalisation du porte-empreinte électronique des figures 14a, 14b et 14c,
- la figure 18 représente une vue schématique en coupe d'un porte-empreinte électronique conforme aux figures 14a, 14b et 14c.
- la figure 19 représente une vue schématique en perspective d'un porte-empreinte électronique selon l'invention, équipé d'une option.
- la figure 20 représente une vue en perspective d'une installation de prise d'empreinte électronique dans son ensemble chez un praticien.
- les figures 21a et 21b représentent deux modes de mise en œuvre du porte-empreinte électronique selon l'invention.

La présente invention se compose d' un porte-empreinte comprenant des caméras et des moyens de projection de lumière, destinés à être disposés en regard d'une arcade dentaire ou partie d'une arcade.

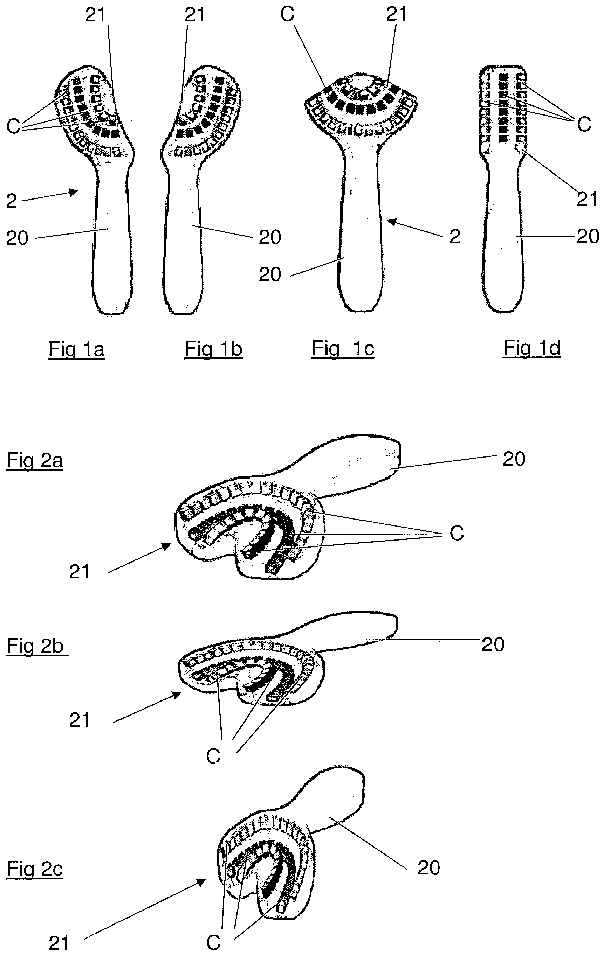

En référence aux figures 1a, 1b, 1c et 1 d, on peut voir différents types de porte-empreinte électronique 1 selon l'invention, lesquels comportent une pièce 2 équipée de séries de capteurs de mesure optique C, arrangée selon l'usage auquel est destiné le porte-empreinte, en l'occurrence, les différents types de porte-empreinte 1 représentés sur ces figures permettent chacun la prise d'empreinte d'une partie définie d'une arcade dentaire.

La pièce 2 présente essentiellement deux parties, une partie 20 constituant un manche de préhension par le praticien, et une partie 21 active, qui comporte les capteurs C.

Ainsi, les figures la et 1b représentent des porte-empreinte 1 destinés à la prise d'empreinte d'une hémi-arcade, et les figures 1c et 1d des porte-empreinte 1 pour la prise d'empreinte d'une partie d'une arcacle,

On notera que la partie comporte de manière préférentielle des moyens, non représentés disposés entre les séries de capteurs C, de projection de lumière passive, non structurée, produite par des LEDs simples ou laser ou de l'halogène pour simplement éclairer l'intérieur de la bouche mais ne servant pas comme vecteur de mesure.

En référence aux figures 2a, 2b et 2c on peut voir un porte-empreinte 1 destiné à la prise d'empreinte d'une arcade complète, la partie active 21 étant en forme d'arc de cercle. Un tel porte-empreinte 1 peut être adapté à la prise d'empreinte de l'arcade supérieure et de l'arcade inférieure.

De manière avantageuse, la pièce 2 peut être, non limitativement, réalisée dans un matériau déformable telle qu'une matière thermoplastique ou une résine souple, et de préférence ne revenant pas à la forme d'origine après adaptation dans la bouche du patient.

Dans ce cas, les capteurs, ainsi que les moyens de projection de lumière, sont prévus aptes, durant la déformation d'ajustement à la bouche du patient, à se déplacer unitairement ou par groupes, afin de ne pas trop éloigner leurs positions spatiales connues et calibrées.

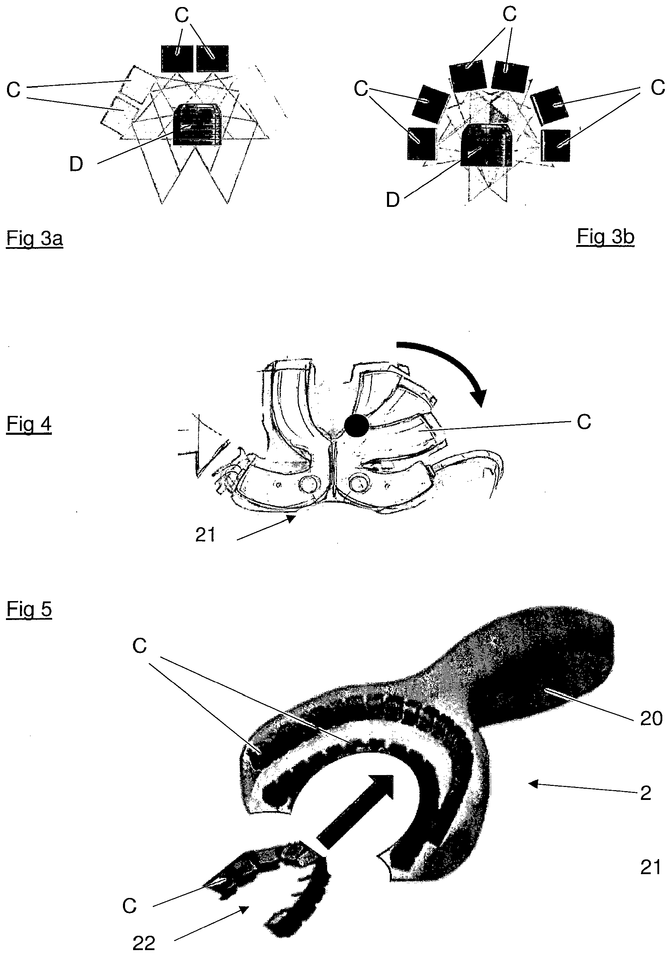

Tel que cela apparaît sur les figures 3a et 3b, les capteurs peuvent être, non limitativement, disposés par paires sur le porte-empreinte, non représenté, et par exemple articulés l'un à l'autre dans chaque paire, pour entourer une ou plusieurs dents D, de manière optimale, tout en restant dans un même plan.

La figure 4 montre ainsi deux porte-empreintes dont l'un est représenté dans différentes positions, au travers d'une articulation R par exemple, tandis que l'autre demeure immobile.

En référence maintenant à la figure 5, on peut voir une autre possibilité de modularité d'un porte-empreinte 1 selon l'invention, notamment en ce qu'une série complète de capteurs C est amovible, en sorte de pouvoir ou non capturer des mesures.

En l'occurrence, la partie active 21 de la pièce 2 présente une arcade complète et, non limitativement, deux séries parallèles en arc de cercle de capteurs C, et un élément 22 est assujetti à la partie active 21, cet élément 22 comportant une troisième série de capteurs, augmentant ainsi la précision, la résolution et/ou la surface de mesure,

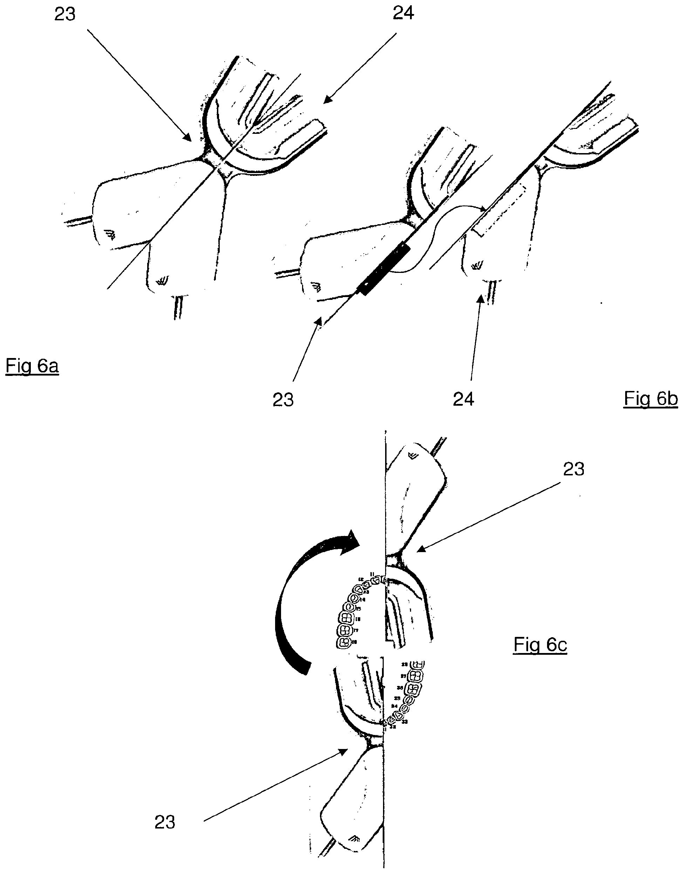

En référence aux figures 6a, 6b et 6c, on peut voir un porte-empreinte 2 fait de deux parties assemblables 23 et 24, correspondant chacune, au niveau de leur partie active, à une hémi arcade, qu'il est possible d'utiliser séparément, ou ensemble pour la prise d'empreinte d'une arcade, la solidarisatiein étant réalisée, non limitativement, mécaniquement ou magnétiquement, au travers d' un moyen N. On notera qu'il est possible de prévoir plus de deux parties assemblables.

Cette configuration permet de simplifier et de réduire la nombre de porte-empreintes puisque la porte empreinte 23 de l'hémi-arcade supérieure gauche, correspond au porte empreinte de l'hémi arcade inférieure droite, en sorte que deux porte-empreintes 23 et 24 permettent de faire les quatre hémi-arcade mais aussi, en les réunissant de faire les deux arcades complètes hautes et basses,

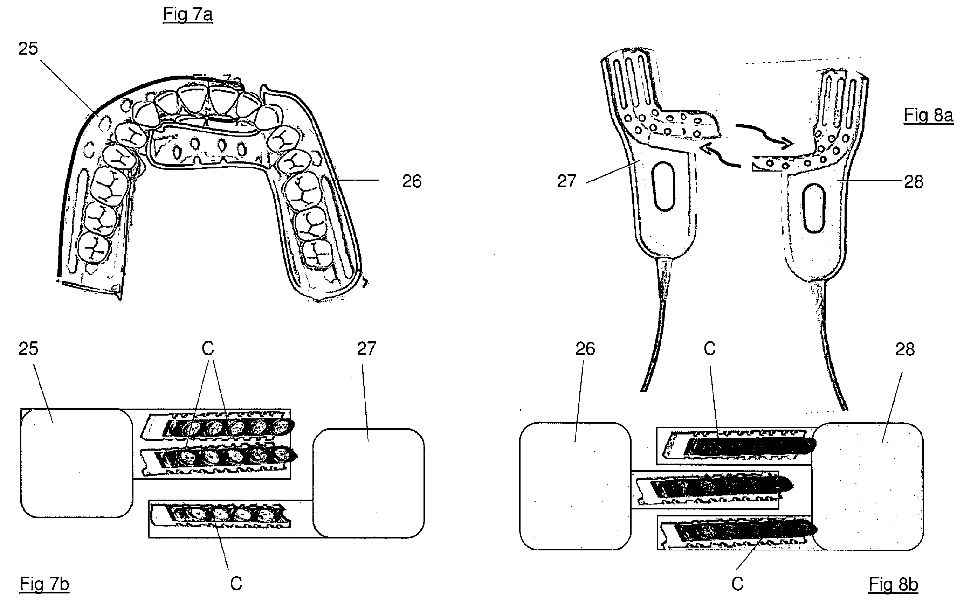

En référence aux figures 7a et 7b, et 8a et 8b, on peut voir, selon d'autres configurations, où le porte-empreinte est également réalisé en deux éléments, 25 et 26, et 27 et 28, qu'après assemblage des deux éléments, des capteurs C de l'un des éléments, se combinent avec des capteurs C de l'autre élément, réalisant ainsi la parfaite fusion de la prise d'empreinte des deux hémiarcades, car ils appuient leurs mesures sur une partie du même objet (les faces d'une ou plusieurs dents) indéformables et commune aux différents portes empreintes. Par exemple ce peut être pour les capteurs d'un porte-empreinte, les faces vestibulaires, alors que pour les capteurs de l'autre porte-empreinte ce sera les surfaces occlusales et linguales de mêmes dents.

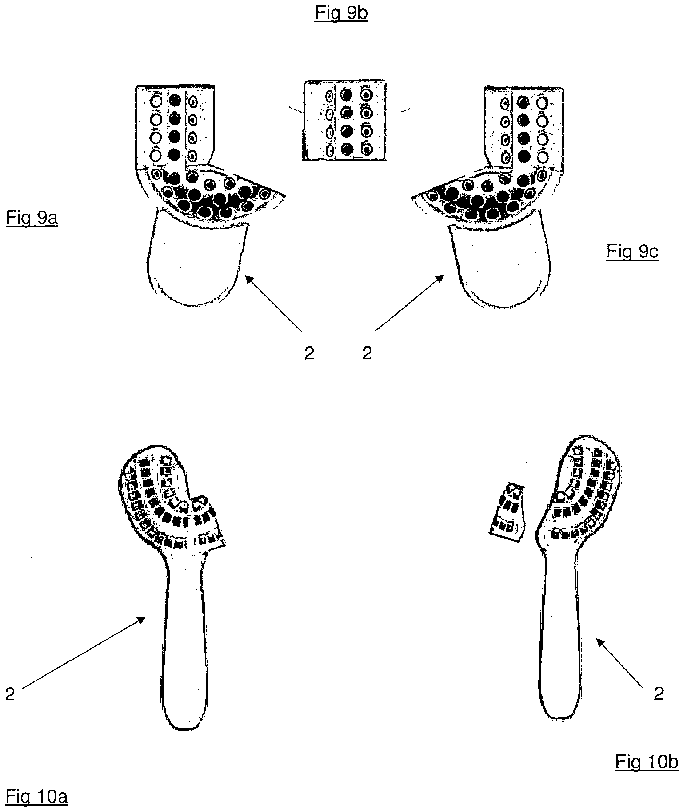

En référence aux figures 9a, 9b et 9c, et aux figures 10a et 10b, on peut voir qu'il est possible de prévoir des éléments assemblables l'un à l'autre avec enlèvement préalable d'une partie de l'autre,

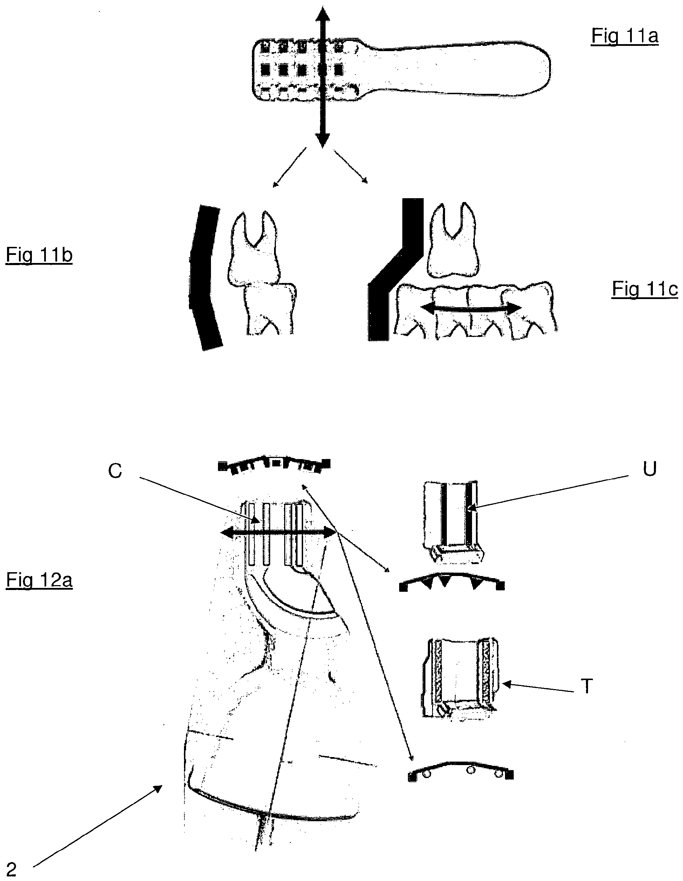

En référence à la figure 11a, on peut voir que la partie active 21 peut se présenter sous la forme d'un plateau présentant une forme particulière, par exemple courbe, adaptée, éventuellement adaptable, aux particularités de l'occlusion, en sorte de permettre la prise de vue des arcades haut et bas en occlusion.

Sur la figure 11b la partie active 21 est de forme concave en regard des dents, sur la figure 11c elle présente un décrochement, afin de mesurer les désengrénements, valeur fondamentale dans les mouvements d'occlusion et permettant de définir la modélisation dynamique de la surface occlusale sans avoir recours aux systèmes complexes des arcs faciaux mécaniques ou électroniques.

on notera qu'en associant aux capteurs optiques un système de senseurs à ultrason et/ou un système OCT (optique cohérente tomographique), cela permet d'avoir une vue latérale incluant la surface osseuse mais aussi une partie sous émail des dents afin de limiter les expositions aux rayons X pendant certains traitements comme celui se rapportant à la couronne ou à la racine dentaire.

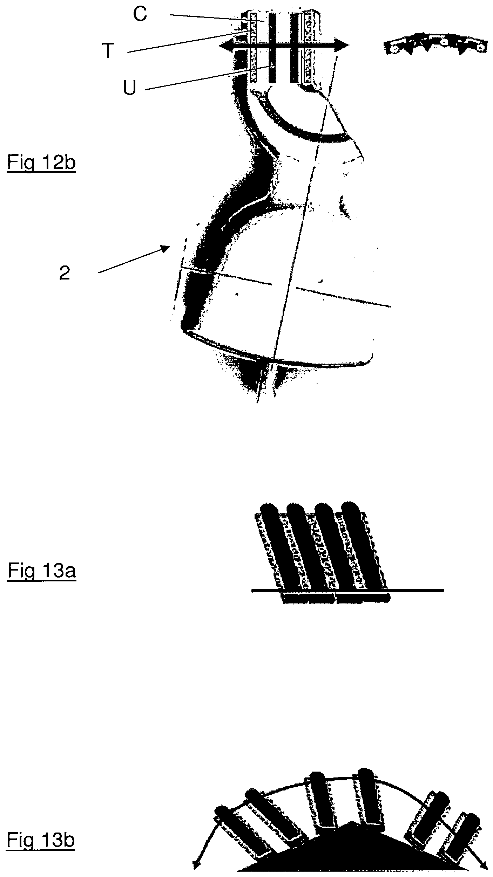

En référence aux figures 12a et 12b, on peut voir un dispositif porte-empreinte selon l'invention, aux capteurs optiques C duquel on peut adjoindre optionnellement, des senseurs un système à ultrason U et/ou un système OCT T (optique cohérente tomographique). Ces différents systèmes peuvent être amovibles, comme cela est représenté sur la figure 12a, ou à demeure comme cela est représenté sur la figure 12b, avec possibilité d'activer l'un et/ou les autres systèmes.

Il est ainsi possible de choisir le type de mesure que l'on souhaite, avec l'avantage de pouvoir choisir quelle mesure doit être prédominante.

En référence maintenant aux figures 13, on peut voir la présence d'un système de calibration permettant à tout instant de vérifier le bon positionnement des capteurs et senseurs des différentes méthodes d'analyse durant la durée de vie du porte empreinte, surtout pour le contrôle du positionnement des parties optiques C et OCT T, mais aussi pour rééquilibrer la position des senseurs et faire connaître au système de traitement de l'image la position des capteurs après déformation et adaptation en bouche du patient par le clinicien. Ce système de calibrage SC peut avoir une forme plane ou courbe pour pouvoir s'insérer dans les portes empreintes.

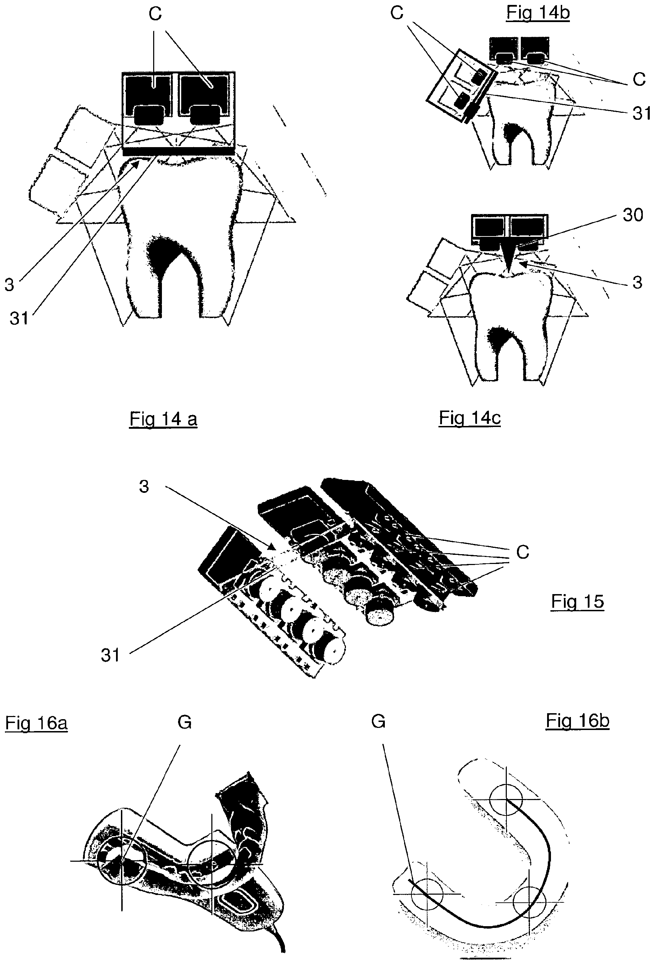

En référence maintenant aux figures 14, on peut voir qu'il est prévu de pouvoir s'appuyer ou non sur les dents afin de positionner idéalement les surfaces mesurées dans le plan focal qui est la zone de haute précision. Ce point d'appui portant sur la surface occlusale comme sur la figure 14a, et/ou sur les surfaces vestibulaire ou linguale, comme sur la figure 14b, dans le cas du capteur d'occlusion.

L' appui sur les dents D peut être réalisé de plusieurs manières, au travers d'un espaceur 3 telles qu'une tige, une pointe, une boule ou une lasse 30, visibles sur la figure 14c, ou bien une paroi transparente 31, telle qu'une vitre par exemple, visible sur les figures 14a et 14b.

La paroi transparente 31 peut recouvrir partiellement ou totalement la surface occlusale et/ou les surfaces vestibulaire et/ou linguale, tel que cela est représenté sur la figure 15.

On notera qu'avantageusement dans le cas d'utilisation de parois transparentes 31, ces dernières pourront porter des gravures ou cibles G représentées sur les figures 16a et 16b, visibles sur l'écran de l'ordinateur et permettant de bien positionner le porte-empreinte dans la zone désirée avant la lecture mais aussi de suivre le déroulement de la prise empreinte durant la lecture.

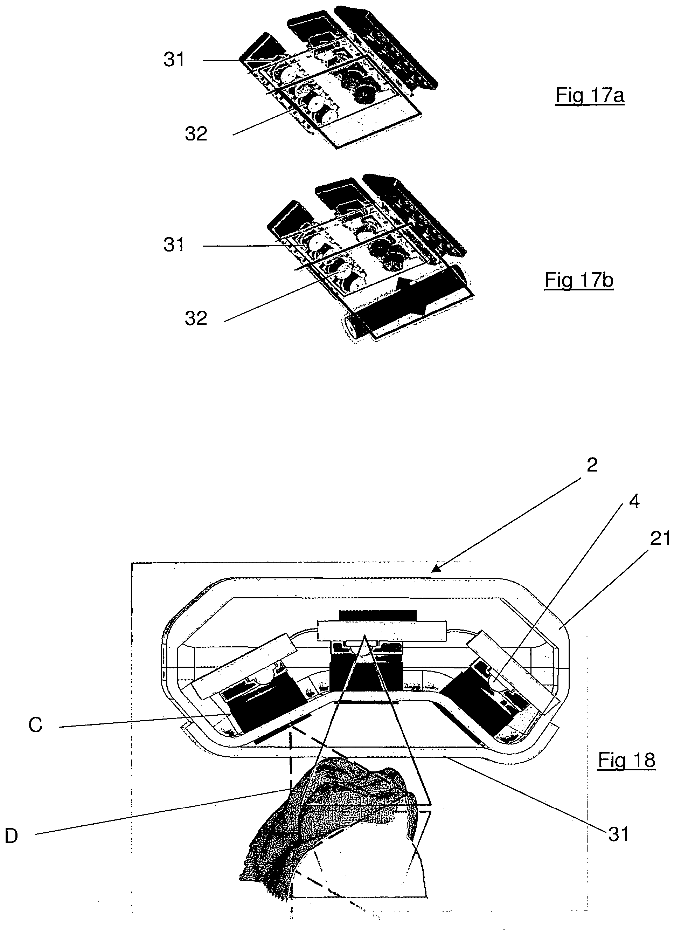

Egalement de manière avantageuse, dans certains cas de prise de vue stéréoscopique dynamique, la calibration et la mise à l'échelle exigent un léger mouvement au démarrage de l'empreinte. Pour faciliter ce mouvement, il est ajouté une seconde paroi transparente 32 glissant sur la première 31 dans les limites du mouvement accepté, tel que cela est représenté sur les figures 17a et 17b, sur cette dernière est représenté un moteur M qui permet de générer le mouvement de frottement.

Le système d'éclairage est préférentiellement périphérique à la ou les parois transparentes, 31 , 32, pour éviter les réflexions sur les surfaces pouvant gêner la bonne lecture.

Il est toutefois possible de disposer, en référence à la figure 18 un système d'éclairage 4, de type LED par exemple, derrière la ou les parois transparentes 31, la glace étant alors choisie la plus non réflective possible et la projection de la lumière sera faite de telle sorte que son axe optique et sa réflexion si elle existe, arrivent le moins possible dans la zone mesurée.

Pour éviter ce type de réflexion, les projections de lumière conduisant à un balayage lumineux devront être toujours éloigné et le moins possible de proche en proche. Ainsi durant le flash de balayage, si le premier flash est dans la zone de début du porte-empreinte, le 2^{ème} sera préférentiellement dans la zone opposée donc de fin puis le 3^{ème} flash dans la zone de début puis le 4^{éme} dans la zone de fin et ainsi de suite.

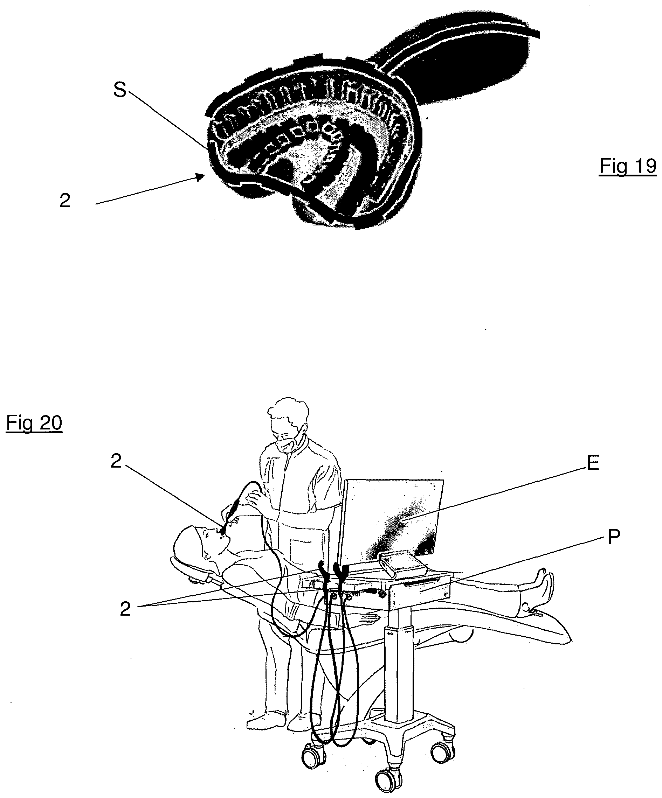

Durant la prise de vue, peut être adjoint un système S d'aspiration salivaire et/ou de projection d'eau et ou d'air permettant de maintenir le plus net possible la zone mesurée hors salive, sang ou buée. Ces systèmes, dont la source des fluides, aspiration ou énergétique sont toujours présents sur l'unit dentaire seront adaptables sur tout ou partie (par exemple périphérie) du porte-empreinte, tel que cela est représenté schématiquement sur la figure 19.

Pour compléter le conditionnement de la zone mesurée, il peut être prévu des moyens de réchauffement du porte-empreinte et/ou de la paroi transparente.

En référence maintenant à la figure 20 on peut voir une installation de prise d'empreinte optique dans son ensemble. Cette installation comporte un ordinateur P de traitement des images captées équipé d'un écran de visualisation E elle comporte de plus un ou plusieurs porte-empreintes selon l'invention, en l'occurrence plusieurs, est connectés de manière filaire, sachant qu'il est également possible d'une connexion sans fil de type par réseau WIFI, Bluetooth ou tout autre.

Le déclenchement de la prise de vue peut être réalisé par bouton, vocalement ou à l'aide d'une pédale par le praticien D ou par un bouton pour le patient P.

En référence maintenant aux figures 21a et 21b, on peut voir que le porte-empreinte 2 peut être en une seule partie ou en deux parties, c'est-à-dire que la. partie active 21 peut être indépendante, en sorte d'alléger la partie proche de la bouche. Pour cela on procède à une répartition optimisée des composants électroniques. Dans le cas d'un porte-empreinte en deux parties, la partie active 21 étant reliée au reste du porte-empreinte ou à l'ordinateur, non visible, au travers d'un fil F, de préférence par un système de communication sans fil.

## Revendications

1. Porte-empreinte électronique (1) utilisable pour la prise de mesures tridimensionnelles et temporelles dans le domaine dentaire, pour le captage d'information dentaire, il consiste en un dispositif comprenant des systèmes de capteurs de mesure optique (C), un système électronique qui comporte une unité centrale de gestion apte à collecter, stocker et ordonner les données relevées par lesdits capteurs, tandis que lesdits capteurs sont répartis sur tout ou partie dudit porte-empreinte pour permettre de réaliser une empreinte optique de tout ou partie d'une arcade dentaire en une ou plusieurs prises, ledit porte-empreinte électronique étant constitué d' une pièce (2, 21) présentant la forme de tout ou partie d'une arcade dentaire, **caractérisé en ce que** ladite pièce (2, 21) est de conception évolutive au travers de facultés de construction en plusieurs éléments (34, 24 ; 25, 26 ; 27 , 28) assemblables et solidarisables entre eux de manière réversible, en sorte de présenter la forme optimale, il est ainsi réalisé en au moins deux éléments solidarisables (23, 24 ; 25, 26 ; 27 , 28), chacun adapté à la prise d'empreinte d'au moins une partie d'une arcade, lesdits au moins deux éléments (23, 24 ; 25, 26 ; 27 , 28) étant configurés en sorte que des capteurs (C) d'au moins l'un d'eux s'associent à des capteurs d'un autre élément, de manière que l'empreinte optique d'au moins une partie de l'arcade soit réalisée avec des capteurs desdits au moins deux éléments (23, 24 ; 25, 26 ; 27 , 28) .

2. Porte-empreinte électronique (1) selon la revendication 1, caractérisé en que les capteurs de mesure optique sont associés à des senseurs à ultrason (U) et/ou OCT (optique cohérente tomographique) (T).

3. Porte-empreinte électronique (1) selon la revendication 1 ou la revendication 2, **caractérisé en ce qu'**il est réalisé en un matériau déformable tel qu'une matière thermoplastique ou une résine souple, ne revenant pas à la forme d'origine après adaptation dans la bouche du patient.

4. Porte-empreinte électronique (1) selon la revendication 1 ou la revendication 2, **caractérisé en ce que** sa partie active (21), équipée de capteurs (C), présente une forme adaptée ou adaptable par déformation, aux particularités de l'occlusion.

5. Porte-empreinte électronique (1) selon l'une quelconque des revendications 1 à 4, **caractérisé en ce que** les au moins deux éléments solidarisables (23, 24 ; 25, 26 ; 27 , 28), sont conformés pour être solidarisés, de manière réversible, par emboîtement.

6. Porte-empreinte électronique (1) selon l'une quelconque des revendications 1 à 4, **caractérisé en ce que** les au moins deux éléments solidarisables (23, 24 ; 25, 26 ; 27 , 28), sont conformés pour être solidarisés magnétiquement.

7. Porte-empreinte électronique (1) selon l'une quelconque des revendications 1 à 6, **caractérisé en ce qu'**il comporte des moyens (3) de réglage de profondeur consistant en des moyens de prise d'appui sur les dents (D).

8. Porte-empreinte électronique (1) selon la revendication 7, **caractérisé en ce que** les moyens (3) de prise d'appui sur les dents (D) consistent en au moins une lame (30), tige ou analogue, faisant saillie entre les capteurs (C).

9. Porte-empreinte électronique (1) selon la revendication 7, **caractérisé en ce que** les moyens (3) de prise d'appui sur les dents (D) consistent en au moins une paroi transparente (31 ; 32), s'étendant au-dessus des capteurs (C).

10. Porte-empreinte électronique (1) selon la revendication 9, **caractérisé en ce que** la paroi transparente (31 ; 32) présente des repères (G).

11. Porte-empreinte électronique (1) selon la revendication 9 ou la revendication 10, **caractérisé en ce que** la paroi transparente (31 ; 32) est déformable.

12. Porte-empreinte électronique (1) selon l'une quelconque des revendications9 à 11, **caractérisé en ce que** la paroi transparente (31) est associée en contact glissant à une autre paroi transparente (32), qui coopère avec des moyens, motorisés ou non, aptes à générer un mouvement de frottement entre lesdites parois transparentes (31, 32).

13. Porte-empreinte électronique (1) selon l'une quelconque des revendications 1 à 12, **caractérisé en ce qu'**il comporte un système (S) d'aspiration périphérique et fou central, et/ou un système de jet d'eau et/ou de d'air.

14. Porte-empreinte électronique (1) selon l'une quelconque des revendications 1 à 13, **caractérisé en ce qu'**il comporte des moyens de projection de lumière passive, non structurée, pour éclairer l'intérieur de la bouche.

15. Porte-empreinte électronique (1) selon l'une quelconque des revendications 1 à 14, **caractérisé en ce qu'**il est de couleur noire afin de ne pas gêner la prise d'informations.

16. Porte-empreinte électronique (1) selon l'une quelconque des revendications 1 à 15, **caractérisé en ce que** sa partie (21) comportant les capteurs (C), est désolidarisée du reste du porte-empreinte (2) et connectée à ce dernier au travers de moyens filaires (F) ou d'un système de communication sans fil.

## Patentansprüche

1. Elektronischer Abdrucklöffel (1), verwendbar für das Nehmen von dreidimensionalen und zeitlichen Messungen in dem Dentalbereich, für die Erfassung von Dentalinformationen, der aus einer Vorrichtung besteht, umfassend die Sensorsysteme für eine optische Messung (C), ein elektronisches System, das eine zentrale Verwaltungseinheit vorweist, die geeignet ist, die durch die Sensoren erfassten Daten zu sammeln, zu speichern und zu ordnen, während die Sensoren über den gesamten oder einen Teil des Abdrucklöffels verteilt sind, um es zu ermöglichen, einen optischen Abdruck des gesamten oder eines Teils eines Zahnbogens in einer oder mehreren Aufnahmen zu erstellen, wobei der elektronische Abdrucklöffel aus einem Stück (2, 21) besteht, das die Form eines ganzen oder eines Teils eines Zahnbogens aufweist, **dadurch gekennzeichnet, dass** das Stück (2, 21) ein entwicklungsfähiges Design besitzt, durch Konstruktionsfähigkeiten in mehreren Elementen (34, 24; 25, 26; 27, 28), die reversibel zusammensetzbar und fest miteinander verbindbar sind, um die optimale Form aufzuweisen, wobei er somit aus mindestens zwei fest miteinander verbindbaren Elementen (23, 24; 25, 26; 27, 28) hergestellt ist, die jeweils für die Abdrucknahme mindestens eines Teils eines Bogens geeignet sind, wobei die mindestens zwei Elemente (23, 24; 25, 26; 27, 28) so konfiguriert sind, dass sich mindestens eines von ihnen mit den Sensoren (C) eines anderen Elements verknüpft, sodass der optische Abdruck von mindestens einem Teil des Bogens mit Sensoren der mindestens zwei Elemente (23, 24; 25, 26; 27, 28) hergestellt wird.

2. Elektronischer Abdrucklöffel (1) nach Anspruch 1,
**dadurch gekennzeichnet, dass** die optischen Messsensoren mit Ultraschall- (U) und/oder OCT-Sensoren (optisch-kohärenten-Tomographie-Sensoren) (T) verbunden sind.

3. Elektronischer Abdrucklöffel (1) nach Anspruch 1 oder 2,
**dadurch gekennzeichnet, dass** er aus einem verformbaren Material wie einem thermoplastischen Material oder einem weichen Harz hergestellt ist, das nach der Anpassung in dem Mund des Patienten nicht in seine ursprüngliche Form zurückkehrt.

4. Elektronischer Abdrucklöffel (1) nach Anspruch 1 oder 2,
**dadurch gekennzeichnet, dass** sein aktiver Teil (21), der mit Sensoren (C) ausgestattet ist, eine Form aufweist, die an die Besonderheiten der Okklusion durch Verformung angepasst ist oder angepasst werden kann.

5. Elektronischer Abdrucklöffel (1) nach einem der Ansprüche 1 bis 4,
**dadurch gekennzeichnet, dass** die mindestens zwei fest miteinander verbindbaren Elemente (23, 24; 25, 26; 27, 28) geformt sind, um reversibel durch Einfügung fest miteinander verbunden zu werden.

6. Elektronischer Abdrucklöffel (1) nach einem der Ansprüche 1 bis 4,
**dadurch gekennzeichnet, dass** die mindestens zwei fest miteinander verbindbaren Elemente (23, 24; 25, 26; 27, 28) geformt sind, um magnetisch fest miteinander verbunden zu werden.

7. Elektronischer Abdrucklöffel (1) nach einem der Ansprüche 1 bis 6,
**dadurch gekennzeichnet, dass** er Mittel (3) zum Einstellen der Tiefe vorweist, die aus Mitteln zum Aufliegen auf den Zähnen (D) bestehen.

8. Elektronischer Abdrucklöffel (1) nach Anspruch 7,
**dadurch gekennzeichnet, dass** die Mittel (3) zum Aufliegen auf den Zähnen (D) mindestens aus einem Blättchen (30), einem Stab oder Ähnlichem bestehen, das/der zwischen den Sensoren (C) hervorsteht.

9. Elektronischer Abdrucklöffel (1) nach Anspruch 7,
**dadurch gekennzeichnet, dass** die Mittel (3) zum Aufliegen auf den Zähnen (D) aus mindestens einer transparenten Wand (31; 32) bestehen, die sich über den Sensoren (C) erstreckt.

10. Elektronischer Abdrucklöffel (1) nach Anspruch 9,
**dadurch gekennzeichnet, dass** die transparente Wand (31; 32) Markierungen (G) aufweist.

11. Elektronischer Abdrucklöffel (1) nach Anspruch 9 oder 10,
**dadurch gekennzeichnet, dass** die transparente Wand (31; 32) verformbar ist.

12. Elektronischer Abdrucklöffel (1) nach einem der Ansprüche 9 bis 11,
**dadurch gekennzeichnet, dass** die transparente Wand (31) in gleitendem Kontakt mit einer anderen transparenten Wand (32) verknüpft ist, die mit motorisierten oder nicht motorisierten Mitteln zusammenwirkt, die geeignet sind, eine Reibungsbewegung zwischen den transparenten Wänden (31, 32) zu erzeugen.

13. Elektronischer Abdrucklöffel (1) nach einem der Ansprüche 1 bis 12,
**dadurch gekennzeichnet, dass** er ein peripheres und/oder zentrales Saugsystem (S) und/oder ein Wasser- und/oder Luftstrahlsystem vorweist.

14. Elektronischer Abdrucklöffel (1) nach einem der Ansprüche 1 bis 13,
**dadurch gekennzeichnet, dass** er Mittel für eine Projektion von passivem, unstrukturiertem Licht zum Beleuchten des Mundinneren vorweist.

15. Elektronischer Abdrucklöffel (1) nach einem der Ansprüche 1 bis 14,
**dadurch gekennzeichnet, dass** er schwarz ist, um die Informationsaufnahme nicht zu hindern.

16. Elektronischer Abdrucklöffel (1) nach einem der Ansprüche 1 bis 15,
**dadurch gekennzeichnet, dass** sein Teil (21), der die Sensoren (C) vorweist, von dem Rest des Abdrucklöffels (2) gelöst und mit letzterem über drahtgebundene Mittel (F) oder ein drahtloses Kommunikationssystem verbunden ist.

## Claims

1. Electronic impression tray (1) which can be used to take three-dimensional and time measurements in the dental field, for capturing dental information, it consists of a device comprising optical measurement sensor systems (C), an electronic system which comprises a central management unit capable of collecting, storing and ordering the data collected by said sensors, while said sensors are distributed over all or a portion of said impression tray to make it possible to produce a digital impression of all or a portion of a dental arch in one or more takes, said electronic impression tray consisting of a part (2, 21) having the shape of all or a portion of a dental arch, **characterized in that** said part (2, 21) has a design which can be scaled by virtue of its ability to be constructed of a plurality of elements (34, 24; 25, 26; 27, 28) which can be reversibly assembled and secured to one another so as to have the optimum shape, it is therefore made of at least two securable elements (23, 24; 25, 26; 27, 28), each suitable for taking the impression of at least one portion of an arch, said at least two elements (23, 24; 25, 26; 27, 28) being configured such that sensors (C) of at least one thereof are associated with sensors of another element, such that the digital impression of at least a portion of the arch is made with sensors of said at least two elements (23, 24; 25, 26; 27, 28).

2. Electronic impression tray (1) according to claim 1, **characterized in that** the optical measurement sensors are associated with ultrasound (U) and/or OCT (optical coherence tomography) sensors (T).

3. Electronic impression tray (1) according to either claim 1 or claim 2, **characterized in that** it is made of a deformable material such as a thermoplastics material or a flexible resin, which does not return to its original shape after being adapted in the patient's mouth.

4. Electronic impression tray (1) according to either claim 1 or claim 2, **characterized in that** its active portion (21), which is equipped with sensors (C), has a shape which is adapted or adaptable by deformation to the specific features of the occlusion.

5. Electronic impression tray (1) according to any of claims 1 to 4,
**characterized in that** the at least two securable elements (23, 24; 25, 26; 27, 28) are shaped to be reversibly secured by interlocking.

6. Electronic impression tray (1) according to any of claims 1 to 4,
**characterized in that** the at least two securable elements (23, 24; 25, 26; 27, 28) are shaped to be magnetically secured.

7. Electronic impression tray (1) according to any of claims 1 to 6,
**characterized in that** it comprises depth adjustment means (3) consisting of means for bearing on the teeth (D).

8. Electronic impression tray (1) according to claim 7, **characterized in that** the means (3) for bearing on the teeth (D) consist of at least one blade (30), rod or the like, which protrudes between the sensors (C).

9. Electronic impression tray (1) according to claim 7, **characterized in that** the means (3) for bearing on the teeth (D) consist of at least one transparent wall (31; 32) which extends above the sensors (C).

10. Electronic impression tray (1) according to claim 9, **characterized in that** the transparent wall (31; 32) has marks (G).

11. Electronic impression tray (1) according to either claim 9 or claim 10,
**characterized in that** the transparent wall (31; 32) is deformable.

12. Electronic impression tray (1) according to any of claims 9 to 11,
**characterized in that** the transparent wall (31) is associated in sliding contact with another transparent wall (32), which cooperates with optionally motor-driven means which are capable of generating a friction movement between said transparent walls (31, 32).

13. Electronic impression tray (1) according to any of claims 1 to 12,
**characterized in that** it comprises a peripheral and/or central suction system (S), and/or a water and/or air jet system.

14. Electronic impression tray (1) according to any of claims 1 to 13,
**characterized in that** it comprises means for projecting passive, unstructured light for illuminating the interior of the mouth.

15. Electronic impression tray (1) according to any of claims 1 to 14,
**characterized in that** it is black so as not to interfere with information gathering.

16. Electronic impression tray (1) according to any of claims 1 to 15,
**characterized in that** its portion (21) comprising the sensors (C) is detached from the rest of the impression tray (2) and connected thereto via wire means (F) or a wireless communication system.
